# EUROPEAN PATENT APPLICATION

(11) **EP 3 527 911 A1**
(43) Date of publication of application: **21.08.2019**
(21) Application number: 18157067.2
(22) Date of filing: 16.02.2018
(51) Int. Cl.: F24S 70/225, C23C 4/10, C23C 4/18, C23C 4/134, F24S 20/20, F24S 10/80

(54) **HIGH PERFOMANCE THERMALLY-SPRAYED ABSORBER COATING**

(71) Applicant: Cockerill Maintenance & Ingenierie S.A., 4100 Seraing (BE)
(72) Inventor: HARZALLAH, Ridha, 4000 Liège (BE); WINAND, Stéphane, 4031 Angleur (BE); CAMPANA, Florent, 4130 Esneux (BE); CRAHAY, Jean, 4970 FRANCORCHAMPS (BE); LARNICOL, Maïwenn, B-5003 Saint-Marc (BE); DEBRABANDERE, Delphine, 7850 Enghien (BE)
(74) Representative: Pronovem

(57) **Abstract**

A method for coating by thermal spraying a substrate (3) for solar applications with a temperature-resistant and high-absorbance ceramic micro-structured coating (1), comprising the following steps :
- preparing a powder mixture (2) comprising ceramic microparticles powder and polyester microballs powder;
- spraying the powder mixture (2) onto the substrate (3) by a thermal spray process in order to form a coating layer (1) on the substrate (3) ;
- heating the substrate (3) having the coating layer (1) to a temperature of at least 400°C so as to evaporate the microballs of polyester from the coating layer (1), leaving porosities (4) at the place of the polyester microballs.

## Description

### Field of the Invention

The present invention relates to an absorber coating showing high performances, in particular resistance to high temperatures.

The present invention also relates to a method for producing this high performance absorber coating, and particularly a method using "plasma spray" technology.

The present invention is applicable in the technical fields where a high thermal energy has to be absorbed (heat exchangers, furnaces, etc.).

### Prior Art

In the CSP molten salt solar tower technology, the heat transfer fluid is a molten salt typically entering at 290°C in the solar receiver tubes and coming out thereof at 565°C. The mean irradiation heat flux is about 1000 kW/m² and the solar receiver panel surface temperature is higher than 700°C.

This very high operating temperature requires the employment of a spectrally selective coating showing high photo-thermal performances and good stability at high temperature in order to guarantee the nominal solar receiver performances.

The solar coating is characterized by its absorptivity in the visible range which should be as high as possible and the emissivity in the infrared range which must be as low as possible. In fact, the reduction of emissivity from 0.88 to 0.4 increases the solar receiver efficiency of about 4% at 650°C and 7% at 800°C. The radiative losses of the solar receiver increase with increasing temperature.

In the particular field of solar tower technology, the absorber coating is a very big issue. In fact, the commercial market reference coating currently used is Pyromark® 2500, a silicon-based high-temperature paint, which has good optical performances (absorptivity of 95% in the solar spectrum 400-2500 nm and emissivity of 85% in the IR 1-20 µm), is of low cost and easy to apply. However its performances decrease after 1 year in operating temperature lower than 600°C, while expected lifetime is between 1 and 3 years. In this case, a maintenance is needed every year in order to maintain a good solar receiver efficiency. Another issue is the increasing of the operating temperature needed for the current molten salt solar receiver projects (>700°C). At such temperatures the coating currently used shows poor performances (absorbance and mechanical degradation).

However, to improve the efficiency of a solar receiver, the operating temperature has to be increased, from 500°C to 700°C. The absorber coating currently used exhibits low performances at such temperatures. For this reason, the development of a new absorber coating having the required high performances at high temperature is sought.

Patent analysis shows that research/innovation in the coating of solar absorbers was started before 1995 and accelerated between 2008 and 2013. These researches are concentrated in USA, Europe (in particular France and Germany) and in China. Chemical and energy companies, as well as research laboratories in these countries, have performed many developments in this topic, especially for photovoltaic cells, Fresnel and parabolic trough collectors technologies which are limited to a working temperature of at maximum 500°C. A particular interest will be devoted below to the coatings developed with high optical performances, i.e. high absorption and low emissivity, and high thermal stability at high temperature.

Many solar selective coating designs (simple layer, multilayer, texturing), compositions (dielectric, cermet, metallic, etc.) and application methods (chemical methods such as electrochemical deposition, spray pyrolysis, dip-coating, sputtering, PVD, etc.) have been developed and investigated.

There are several ways of achieving a solar selective absorbing surface. The simplest type of design would be to use materials having intrinsic solar selective properties. However there are no natural materials that have such ideal solar selective properties. Some of the widely applied designs are discussed below.

### The multilayer coatings

Document US2014/0261390A1 discloses a multilayer selective coating intended for CSP tower plants. This coating has a high absorptivity (0.95 at 600°C) and a low emissivity (0.07 at 700°C), and is composed of:
- a first diffusion barrier made of : SiOx, SiN, TiO₂, TiOx, Metal/AlOx CERMET or Metal/SiOx CERMET;
- a second diffusion barrier made of: SiOx, SiN, TiO₂, TiOx ;
- a metallic infrared reflective layer;
- a solar absorbing layer made of CERMET : SiO, AIO + Pt, Ni, Pd, W, Cr or Mo ;
- a third diffusion barrier made of: SiOx, SiN, TiO₂, TiOx ;
- an antireflective layer; and
- a hard protective layer on the top of the coating.

Document WO2014/045241A2 discloses a coating having an absorptivity of 0.9 and an emissivity of 0.1 at 400°C. This coating is applied by "dip coating" and is made by alterning 100 nm thickness layers of Cu-Co-Mn-O/Cu-Co-Mn-Si-O and SiO. The SiO layer is applied to protect the coating and to act as an antireflection layer.

Document WO2013/088451A1 is related to a multilayer coating made by alternating a barrier/absorber layer and antireflection layer: Ti/Cr/AlTiN/AlTiON. This coating is applied by "sputtering" on a stainless steel substrate. It shows an absorptivity of 0.92, an emissivity of 0.17, and a thermal stability until 350°C in air and 450°C in vacuum.

In document WO2014/122667A1, the multilayer disclosed is made of Cr/Ti - AlTiN - AlTiON - AlTiO layers and an organically modified silicon layer (ormosil). This coating is thermally more stable (500°C in air and 600°C in vacuum) than this one disclosed in WO2013/088451A1.

Document WO2009/051595A1 is related to two multilayer coatings made of 9 layers TiO₂, SiO₂ and TiSi (or Pt) deposited by "sputtering". These coatings have an absorptivity of 0.96 and an emissivity of 0.082 at room temperature and of 0.104 at 500°C.

Document WO2005/121389A1 discloses a coating deposited by « DC sputtering » made of:
- a reflective layer of WN or ZrN;
- an absorbing CERMET layer (in which the metallic component is TiNx, ZrNx or HfNx and the ceramic component is AIN);
- and an antireflective layer on the top made of AIN or Al₂O₃.

The coating disclosed in the document EP2757176A1 is a selective multilayer coating with high absorptivity and low emissivity made of a Mo layer, a CERMET TiO₂/Nb layer and a SiO₂layer.

### Surface texturing

Surface texturing is the second approach suitable to increase the solar absorptivity, by generating multiple internal reflections.

An ideally roughened surface simultaneously displays high absorptivity at short wavelengths and low emissivity at longer wavelengths. Dendrite or porous microstructures with feature sizes comparable to the wavelengths of incident solar radiation can be useful in tailoring the optical properties of solar absorbers. Short-wavelength photons are easily trapped inside the surface. On the other hand, photons with wavelengths larger than the dendrite spacing see a "flat" surface.

Document US6783653B2 discloses an absorber coating with its application method. The absorber coating is a sol-gel textured coating with peak shape.

The coating disclosed in the document US2011/0185728A1 is made of a nano-textured encapsulated vertically oriented components to capture energy. However the adhesion of this coating is altered with temperature increase.

### The chemical coating composition

The chemical composition is one of parameters that defines the optical performances of the solar coating. Several formulations have been studied: Cr black, Ni, Cu, Mo, Al, Ni-Sn, Ni-Cd, Co-Sn, Co-Cd, Mo-Cu, Fe-P, Cu-Ni, CERMET (CERamic-METal), spinels, metallic oxides, etc. The most promising formulations are based on Ni, Ce, Co and W oxides.

In C.E. Kennedy, Review of Mid- to High-Temperature Solar Selective Absorber Materials, NREL/TP-520-31267, July 2002", it is shown that:
- W-WOx, Mo-MoO₂, Cr-SiO, Ti-AIN, Lithium Zinc Ferrite (LiFeZnO), ZrO₂, TiO₂ and CeO₂ are good candidates for high optical performances at high temperature due to the oxide formation on the surface ;
- SnO₂ is also an interesting coating due to its high antireflection capacities ;
- materials such as Mo, Pt, W, HfC and Au have a high thermal stability at high temperature (> 600°C), but metal oxides NiO, CoO show still higher thermal stability (>800°C). Intrinsic solar selective properties are found in transition metals and semiconductors, but no natural materials have perfect ideal selectivity. In general, they work better as primary layers for more complex selective absorber designs, such as multilayer stacks or Cermets ;
- depending on the operating conditions, a wide variety of semiconductors may be suitable for selective solar absorbers, including silicon, germanium, and lead sulfide. Due to the high refractive index found near the band edge of most semiconductors, which creates unwanted reflection for frequencies above the band gap, an antireflective coating is generally added to decrease the reflection and, thus, enhance performance ;

In C.E. Kennedy et al., Progress in development of high-temperature solar selective coating, ASME 2005 International Solar Energy Conference, pp. 749-755, it is shown that textured Ni and Cr coatings oxidize at temperatures higher than 350°C.

### Coating deposition methods/processes

Many solar coating deposition methods (processes) have been investigated: painting, physical deposition processes, oxidation process, and thermal spray coating.

### Physical vapor deposition (PVD) process

N. Selvakamar and H.C. Barshilia, in Review of physical vapor deposited (PVD) spectrally selective coatings for mid- and high- temperature solar thermal applications, Solar Energy Materials and Solar Cells, Elsevier (2012) Vol. 98, pp. 1-23, have performed a synthetic analysis on the most interesting developed and commercialized solar absorber coatings applied by PVD on a stainless steel substrate. These coatings are particularly developed for low to medium working temperature (200 to 500°C) for applications such as parabolic technology. These coatings are not applicable for solar receivers which work at higher temperature (>650°C).

### The DC sputtering technique

This technique is widely used for the deposition of multilayer coatings. However, it is not applicable for solar receiver tubes due to their large dimensions and high operating temperature which exceeds the limits of this technique.

### Painting process

Many coatings deposited by painting have been developed:
- document WO2012/127468A2 discloses several painting formulations. Some of these formulations show high absorptivity and low emissivity compared to the Pyromark® 2500 ;
- document US2014/0326236A1 is related to a formulation applied by painting. This coating shows a high absorptivity (95%) and high thermal stability (minimum 1000h at 750°C). This paint formulation comprises an inorganic oxide-based pigment, an organic binder, at least one organic solvent and an inorganic filler, wherein the organic binder is irreversibly converted to an inorganic binder upon curing of the paint formulation at a temperature greater than 200°C.

### Thermal spray coating process

This process is widely used for corrosion and wear resistant coating applications. However, the development of this technique for the solar coating application is very limited.

The thermal spray coating which is a very flexible coating application method was investigated (different types of coatings and substrates). Different types of thermal spray coatings are used which differ by the energy source (arc, flame, plasma, etc.) and the filler metal (wire or powder). Depending on the process type, thermal spray coating could be applied in workshops or on site.

The plasma thermal spray coating was investigated by Sandia National Laboratories due to the high performances of the applied coating related to the high melting point of the applied material. The results of the performed developments are presented in the following reports :
- A. Ambrosini, High-Temperature Solar Selective Coating Development for Power Tower Receivers, CSP Program Summit 2016, energy.gov/Sunshot and A. Ambrosini, Improved High Temperature Solar Absorbers for use in Concentrating Solar Power Central Receiver Applications, ASME 2011, 5th Int. Conf. on Energy Sustainability, pp. 587-594. In these reports, several commercialized powders for the thermal spray coating are compared, and different tests are performed. In report of A. Hall et al., "Solar Selective Coatings for Concentrating Solar Power Central Receivers", ADVANCED MATERIALS & PROCESSES, JAN. 2012, it is shown that the thermal spray of the Cr₂O₃ coating is a very interesting solution due to its high thermal and chemical stability. A laser texturing of the coating surface increases its absorbance. However, ageing tests show that the efficiency of this coating decreases rapidly with temperature increase. CeO₂ is also a good candidate with a high efficiency after ageing for 2 weeks at 700°C.
- In a the above-mentioned report, A. Hall et al. deliver a synthesis of the developments realized by Sandia Laboratory on the thermal spray coating in order to be applied on the solar receivers. It is illustrated therein that Ni-5AI and WC-20Co coatings are good candidates, and that surface roughness after thermal spray coating is more prone to better performances than polished surface. He mentions that a particular attention should be made to the thermal expansion when selecting the coating material. In fact, the WC-Co is a good candidate due to its high optical performances but it exhibits a high delamination due to the difference in its thermal expansion coefficient and that of the substrate.

All these data interestingly provide an overview of the existing solutions and convince that there is no solution that meets current requirements simultaneously in terms of high performance (>95% of absorptivity) at high temperature (>700°C) for a long lifetime (>5years).

Currently, it is very challenging to improve the performances of absorber coating at high temperature. Indeed, to improve the efficiency of a solar receiver, the operating temperature is more and more increased (in the range from 700°C to 850°C), and the need of a new absorber coating with high performances at high temperature is acute.

### Aims of the Invention

The present invention aims to provide a method for supplying an absorber coating with high performances at high temperature, especially a method for providing an absorber coating with higher performances intended for solar receivers operated at temperatures higher than 850°C.

The invention also aims to provide a coating with an increased lifetime and a life time of minimum 5 years without any optical and mechanical performance degradations, leading to a reduced on-site maintenance.

### Summary of the Invention

The present invention relates to a method for coating by thermal spraying a substrate for solar applications with a temperature-resistant and high-absorbance ceramic micro-structured coating, comprising the following steps :
- preparing a powder mixture comprising ceramic microparticles powder and polyester microballs powder;
- spraying the powder mixture onto the substrate by a thermal spray process in order to form a coating layer on the substrate ;
- heating the substrate having the coating layer to a temperature of at least 400°C so as to evaporate the microballs of polyester from the coating layer, leaving porosities at the place of the polyester microballs.

According to preferred embodiments of the invention, the method is further limited by one of the following features or by a suitable combination thereof:
- the thermal spray process is a plasma spray process ;
- the ceramic microparticles are selected from the group of spinel structure particles and perovskite particles ;
- the spinel structure particles are manganese-cobalt oxide (MCO) particles ;
- the perovskite particles are lanthanum-manganese or lanthanum-cobalt/chromium oxide particles ;
- the perovskite particles are lanthanum-strontium-cobalt-ferrite (LSCF) particles or lanthanum strontium manganite particles (LSM) ;
- the size of the ceramic microparticles is comprised between 5 and 50 microns ;
- the size of the polyester microballs is comprised between 40 and 150 microns ;
- the percentage of the polyester microballs in the powder mixture is comprised between 10 and 30% w/w ;
- the substrate is maintained under 100°C before and during spraying the powder mixture ;
- the substrate is a solar receiver composed of heat exchange tubes made of steel or Ni-based alloy ;
- the coating is applied according one single layer or according one layer on a sub-layer.

The present invention also relates to a coating manufactured with the method described above, and to a coated substrate suitable for solar applications, having a temperature-resistant and high-absorbance ceramic micro-structured coating such as described above.

Preferably, the thickness of the coating is comprised between 50 and 150 microns and the coating porosities have an average diameter of 20 to 50 microns.

Another aspect of the invention relates to a solar receiver comprising heat exchange tubes made of the coated substrate as described above.

### Brief Description of the Drawings

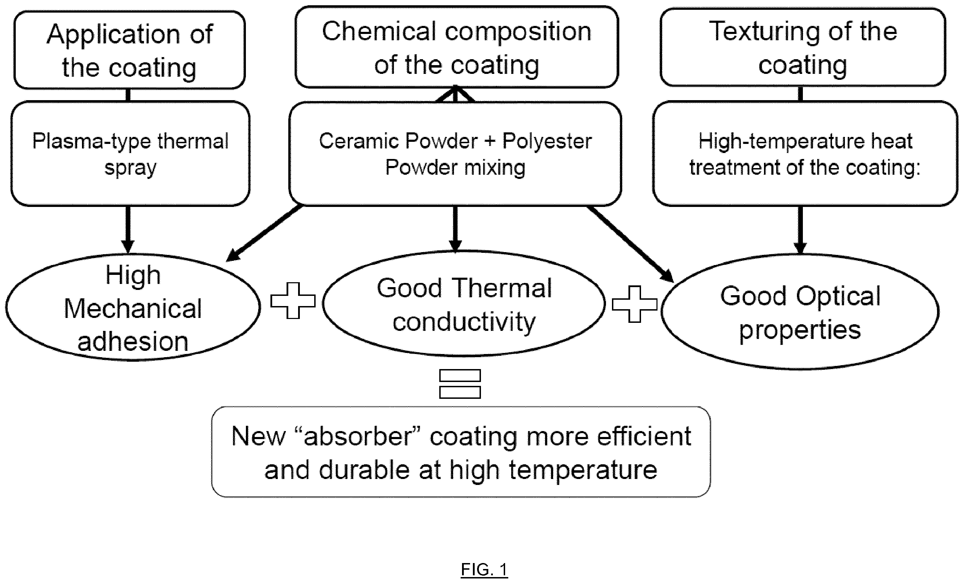

Figure 1 schematically represents the key parameters of the coating development strategy according to the present invention.

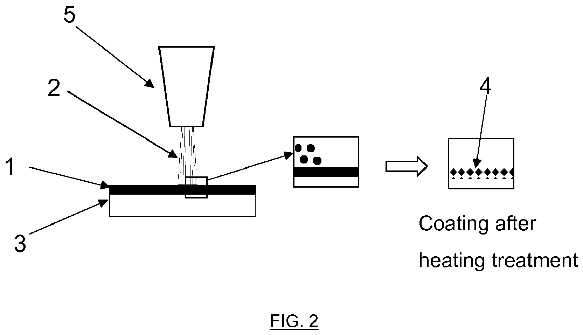

Figure 2 schematically represents the method of performing a solar coating according to the present invention.
Figure 3A shows an example of electron micrograph of a coated sample after plasma spraying of the powder mixture comprising ceramic microparticles powder and polyester microballs powder, according to the present invention.
Figure 3B shows an electron micrograph of the coated sample of figure 3A after further heat treatment, according to the present invention.

### Reference Symbols

- 1: Coating
- 2: Mixture of ceramic powders and polyester microballs (plasma spray)
- 3: Substrate
- 4: Porosities
- 5: Plasma torch
- 6: Light traps

### Description of Preferred Embodiments of the Invention

The present invention relates to a new thermal spray method for applying on a substrate 3, generally being metallic (e.g. steel), a simple (single) layer solar selective coating 1. This type of coating can be applied on substrate 3 by different thermal spray applications such as power flame spray or high velocity oxyfuel spray (HVOF) but the selected method is preferably plasma spray method. In plasma spray, a high frequency arc is ignited between an anode and a tungsten cathode. A gas flowing between the electrodes is ionized such that a plasma plume having a length of several centimeters develops. The temperature within the plume can be as high as 16000K. The particles velocity is 100-300 m/s. The spray material is injected as a powder outside of the gun nozzle into the plasma plume, where it is melted and projected onto the substrate surface.

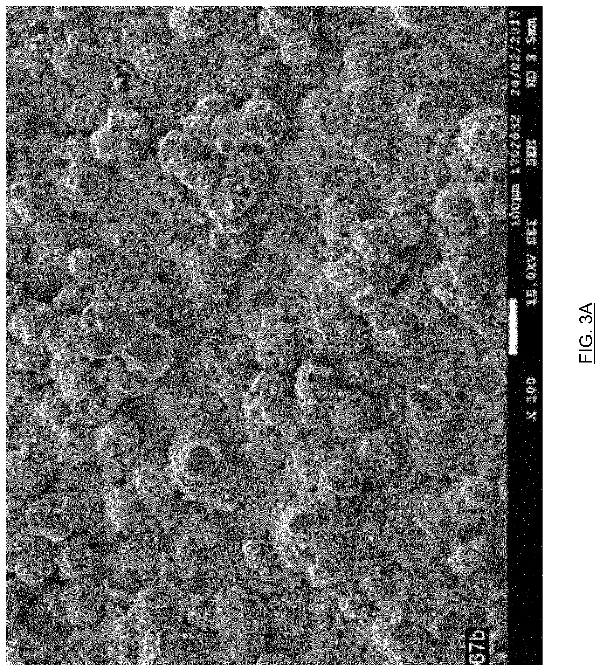

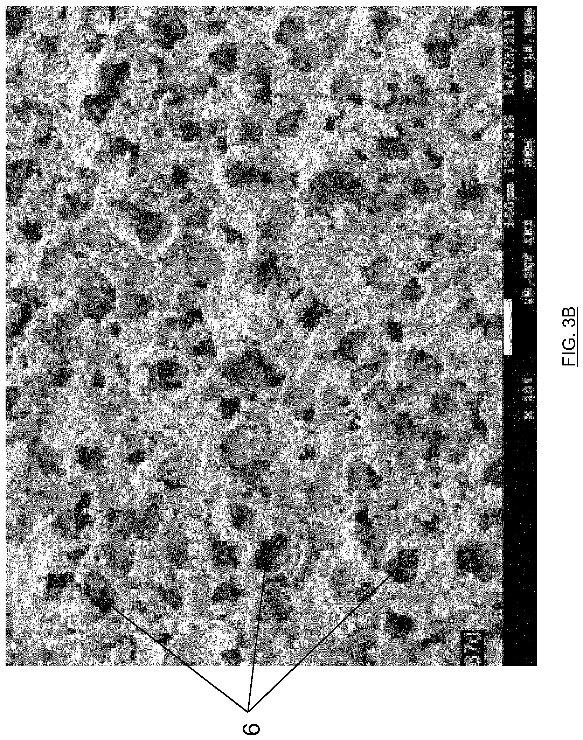

According to the invention, a mixture of ceramic powders and microballs of polyester 2 is deposited onto substrate 3 by a thermal spray process, and preferably by air-plasma spray (APS) process using a plasma torch 5. In the plasma process, the mixture 2 is melted and projected on substrate 3, adhering and solidifying on the surface thereof to form the coating layer 1 (see figure 3A). Thereafter the projected microballs of polyester present in the mixture of powders are going to divide up in coating layer 1. Further, the substrate comprising coating layer 1 is heated to a high temperature (> 400°C), which leads to the evaporation of the microballs of polyester, leaving local porosities 4 instead (see figure 3B).

Further, these porosities 4 are going to act as a light trap 6 and so to allow increasing the absorbance of the coating 1. Once applied to the surface of the solar receiver, this coating 1 will thus allow to absorb a maximum of solar energy (94.5-95.5% of absorptivity in the solar spectrum 400-2500 nm) and reemit a minimum thereof (75-80% of emissivity in the infrared spectrum 1-20 µm), thereby increasing the efficiency of the solar receiver panel from 90.5% to 91.35% (+0.85% efficiency with respect to prior art paint such as Pyromark paint). The lifetime is estimated to increase from 1 year to 5 years as 1000 additional cycles can be performed at 750°C, as inferred from bending tests (not shown).

The process parameters affect the microstructure and properties of the coating layer. Appropriate selection of the material to be applied is essential (type, characteristics, geometry, dimensions). Finer particles are susceptible to be vaporized, coarser particles lead to a lack of fusion which is not suitable for the formation of a dense coating layer with good adhesion to the substrate.

According to one embodiment, ceramic powder is preferably spinel structure particles (with chemical structure (AB)₂O₃, where A and B are metallic cations). More preferably the spinel-structured material is manganese-cobalt oxide (MCO) under the form of Mn_{1.5}Co_{1.5}O₄.

Still according to another embodiment, ceramic powder can also be perovskite particles (with chemical structure (AB)₃O₄, where A and B are metallic cations), such as lanthanum-manganese and lanthanum-cobalt/chromium oxides, and preferably lanthanum-strontium-cobalt-ferrite (Sr-doped LaCo₁₋ₓFeₓO₃ or LSCF) or lanthanum strontium manganite (LSM).

The size of the ceramic powder particles is preferably comprised between 5 and 50 microns.

The size of the polyester balls is preferably comprised between 40 to 150 microns, and still preferably with a mean size about 60 microns.

Particle size analysis or determination is obtained by methods known of the one skilled in the art, such as laser diffraction, sieve analysis (e.g. according to ASTM B214), etc.

According to one embodiment, the percentage of polyester balls in the mixture 2 is comprised between 10 and 30% (w/w), and preferably 20% (w/w).

The proposed solution is to apply by plasma spray process a specific mixture of high-temperature stable powders in order to form the coating. This technology insures a very good adhesion of the coating on the substrate by mechanical cohesion even at very high-temperature (see electron micrographs, figures 3A and 3B).

According to one embodiment, texturing the surface by ageing the coating is a proposed approach to increase the solar absorptivity by generating multiple internal reflections.

One advantage of the present invention is that the coating achieved by plasma spray in the present invention exhibits better optical properties, what allows to improve the efficiency of the solar receiver, and a longer lifetime at high-temperature, which allows to reduce the on-site maintenance operations.

In conclusion, thermally-sprayed absorber coating obtained by the plasma spray method of the present invention exhibits an improved behaviour in surface degradation, an improved life-time, and reduced costs of maintenance, while improving the absorbance properties. This new solution will give the opportunity to the CSP customers to economize money by reducing the on-site maintenance operation number and shutdown periods of the power plant, which is a commercial advantage for the solar receiver supplier.

## Claims

1. A method for coating by thermal spraying a substrate (3) for solar applications with a temperature-resistant and high-absorbance ceramic micro-structured coating (1), comprising the following steps :
- preparing a powder mixture (2) comprising ceramic microparticles powder and polyester microballs powder;
- spraying the powder mixture (2) onto the substrate (3) by a thermal spray process in order to form a coating layer (1) on the substrate (3) ;
- heating the substrate (3) having the coating layer (1) to a temperature of at least 400°C so as to evaporate the microballs of polyester from the coating layer (1), leaving porosities (4) at the place of the polyester microballs.

2. The method according to claim 1, wherein the thermal spray process is a plasma spray process.

3. The method according to claim 1, wherein the ceramic microparticles are selected from the group of spinel structure particles and perovskite particles.

4. The method according to claim 3, wherein the spinel structure particles are manganese-cobalt oxide (MCO) particles.

5. The method according to claim 3, wherein the perovskite particles are lanthanum-manganese or lanthanum-cobalt/chromium oxide particles.

6. The method according to claim 5, wherein the perovskite particles are lanthanum-strontium-cobalt-ferrite (LSCF) particles or lanthanum strontium manganite particles (LSM).

7. The method according to claim 1, wherein the size of the ceramic microparticles is comprised between 5 and 50 microns.

8. The method according to claim 1, wherein the size of the polyester microballs is comprised between 40 and 150 microns.

9. The method according to claim 1, wherein the percentage of the polyester microballs in the powder mixture (2) is comprised between 10 and 30% w/w.

10. The method according to claim 1, wherein the substrate (3) is maintained under 100°C before and during spraying the powder mixture.

11. The method according to claim 1, wherein the substrate is a solar receiver composed of heat exchange tubes made of steel or Ni-based alloy.

12. The method according to claim 1, wherein the coating (1) is applied according one single layer or according one layer on a sub-layer.

13. A coated substrate for solar applications having a temperature-resistant and high-absorbance ceramic micro-structured coating (1), obtained by the method according to anyone of the preceding claims.

14. The coated substrate according to claim 13, wherein the thickness of the coating is comprised between 50 and 150 microns.

15. The coated substrate according to claim 13, wherein the coating porosities have an average diameter of 20 to 50 microns.

16. Solar receiver comprising heat exchange tubes made of the coated substrate according to anyone of claims 13 to 15.
